Europäisches Patentamt

European Patent Office

Office européen des brevets

(19)

(11) Numéro de publication: **0 186 577**

**A2**

(12)                  **DEMANDE DE BREVET EUROPEEN**

(21) Numéro de dépôt: 85402483.3

(22) Date de dépôt: 13.12.85

(51) Int. Cl.⁴: **G 01 N 27/26**

(30) Priorité: 14.12.84 FR 8419219

(43) Date de publication de la demande:
02.07.86 Bulletin 86/27

(84) Etats contractants désignés:
AT BE CH DE FR GB IT LI LU NL SE

(71) Demandeur: BIOLYON Société Anonyme dite:
6, route de Paisy
F-69572 Dardilly Cedex(FR)

(72) Inventeur: Christophe, Jean
35, avenue Guillaume Maçau
B-1050 Bruxelles(BE)

(72) Inventeur: Robyn, Claude
60, avenue Seghers
B-1050 Bruxelles(BE)

(72) Inventeur: Svoboda, Michel
31, Vinkenlaan
B-1800 Vilvoorde(BE)

(72) Inventeur: Meuris, Sylvain
11, avenue Henri Liebrecht
B-1090 Bruxelles(BE)

(74) Mandataire: Gillard, Marie-Louise
Cabinet Beau de Loménie 55, Rue d'Amsterdam
F-75008 Paris(FR)

(54) Dispositif pour électrophorèse transversale.

(57) L'invention concerne un dispositif pour l'électrophorèse transversale.

Ce dispositif comporte une cuve (1) munie de: un couvercle (5), une anode (2), une cathode plate (4), et des moyens électriques de connexion (6), ladite anode (2) étant une anode plate ayant sensiblement les mêmes dimensions que celles de la cuve et comprenant un support constitué d'un matériau chimiquement inerte éventuellement revêtu d'au moins une couche conductrice constituée d'une couche mince d'un métal et/ou d'oxydes métalliques conducteurs ou semi-conducteurs résistant à l'oxydation anodique.

Application: Séparation des protéines.

Fig.1

EP 0 186 577 A2

0186577

Dispositif pour electrophorèse transversale

La présente invention concerne le domaine de la caractérisation physico-chimique des macromolécules chargées et plus
particulièrement l'électrophorèse transversale qui précède la
détection spécifique des macromolécules préalablement séparées
lors d'une première électrophorèse. Les quelques exemples qui
suivent montrent la diversité des domaines dans lesquels l'électrophorèse transversale a déjà été utilisée :

1/ identification des antigènes tumoraux des cellules hépatiques
(chromatine d'hépatome de Novikoff) (Glass, W.F., Briggs R.C. and
Hnilica L.S., Science, 211, 70-72, 1980) ;

2/ détection de protéines virales (virus MuLV) dans des cellules
infectées de souris (Burnette, W.N. Anal. Biochem. 112, 195-203,
1981) ;

3/ identification par des lectines de glycoprotéines virales
(Yassa virus) des cellules Vero CV-1 infectées. (Clegg J.C.S Anal.
Biochem. 127, 389-394,1982) ;

4/ identification de mutants de levures et test de spécificité
d'antisera dirigés contre une protéine multimérique (ATPase)
(Haid A. and Suissa, Methods in Enzymology 96, 192-205, 1983) ;

5/ diagnostic de maladies parasitaires (Schistosoma Mansoni)
(Tsang V.C.W., Peralta S.M. and Simons A.R., Methods in Enzymology
92, 377-391, 1983) ;

6/ screening des anticorps monoclonaux (De Blas A.L. and Cherwinski
H.M., Anal. Biochem. 133, 214-219, 1983).

L'électrophorèse utilisant un gel comme milieu anticonvecteur est une méthode extrêmement performante de séparation
de macromolécules chargées. Les gels utilisés le plus souvent sont :
les gels de polyacrylamide pour séparer les protéines et les gels
d'agarose ou des gels composites polyacrylamide-agarose pour séparer
les acides nucléiques.

Pour avoir un pouvoir de séparation optimum, ces électrophorèses doivent être réalisées dans des milieux dénaturants
(SDS, urée, etc).

0186577

Les méthodes de détection spécifiques des protéines et des acides nucléiques font appel à une réaction spécifique entre la molécule à détecter (séparée par l'électrophorèse sur gel) et une autre molécule ayant une haute affinité pour elle. Ainsi, de manière non limitative, on peut détecter les protéines par des anticorps dirigés spécifiquement contre elles, les glycoprotéines par des lectines et les acides nucléiques par une sonde ayant une séquence complémentaire. Pour que cette réaction entre ligand et "récepteur" puisse avoir lieu, il faut un milieu approprié (en général différent du milieu dénaturant de la première électrophorèse) et il faut que le ligand moléculaire puisse arriver sans contrainte jusqu'aux molécules "réceptrices" à détecter. Or, la mobilité des macromolécules dans les gels d'électrophorèse est fort restreinte.

Un progrès très net a été réalisé lorsqu'on s'est aperçu qu'après électrophorèse les protéines ou les acides nucléiques séparés pouvaient être transférés du gel sur des supports solides divers. De cette manière, non seulement le pouvoir de résolution considérable de l'électrophorèse en gel de polyacrylamide était préservé mais les macromolécules sorties des mailles du gel devenaient accessibles à toute une série de réactifs permettant de les identifier, tels que ceux cités précédemment. Ainsi par exemple, des anticorps spécifiques des protéines recherchées, ou encore des lectines ou des acides nucléiques, peuvent être incubés avec ces supports.

Il existe plusieurs types de transfert : le transfert par capillarité, le transfert par diffusion et le transfert par électrophorèse, ce dernier étant le plus rapide.

Le transfert par électrophorèse consiste à utiliser un champ électrique pour transférer des macromolécules séparées sur gel (par exemple des protéines séparées par électrophorèse en gel de polyacrylamide), de ce gel sur un support approprié, par exemple sur un papier de nitrocellulose. Ce type de transfert a été décrit pour la première fois par TOWBIN et al. en 1979 (Proc. Natl. Acad. Sci., 76:4350-4354).

Les protéines ainsi transférées sont alors seulement accessibles aux anticorps ou aux lectines et les acides nucléiques aux acides nucléiques complémentaires.

Pour réaliser un transfert électrophorétique quantitatif, rapide et sans perte de résolution, le champ électrique doit être homogène et perpendiculaire à la surface du gel. Les cuves pour électrophorèse transversale fabriquées jusqu'à présent utilisent des électrodes constituées d'un réseau serré de fils de platine (jusqu'à plusieurs mètres par cuve) et sont conçues de manière à ménager une distance, entre les électrodes placées verticalement, supérieure à celle séparant les fils de platine des réseaux constituant chaque électrode. Le transfert des macromolécules se faisant horizontalement plus d'un litre de tampon est en pratique nécessaire par électrophorèse.

On a maintenant trouvé que l'on peut utiliser comme anode, dans de tels procédés de transfert par électrophorèse, un matériau chimiquement inerte éventuellement revêtu d'au moins une couche mince d'un métal et/ou d'un oxyde métallique conducteur ou semi-conducteur résistant à l'oxydation anodique.

A titre de matériau chimiquement inerte qui convient aux fins de l'invention on peut citer les matériaux non conducteurs, tels que notamment le verre, les plastiques et les céramiques et les matériaux conducteurs, tels que par exemple le graphite, l'or, le titane, le molybdène et le chrome.

Lorsque le matériau chimiquement inerte est non conducteur celui-ci doit être revêtu d'au moins une couche mince d'un métal et/ou d'un oxyde métallique conducteur ou semi-conducteur résistant à l'oxydation anodique.

A titre d'exemples de métaux et/ou oxydes métalliques qui conviennent aux fins de l'invention, on peut citer notamment, le platine, l'or, l'argent, le graphite ainsi que les oxydes d'étain, chrome et cobalt. On préfère utiliser l'oxyde d'étain.

Selon l'invention, l'anode a une surface conductrice continue au moins égale à la surface du gel de séparation de première électrophorèse, de manière à créer un champ électrique homogène à travers toute la surface du gel et donc un transfert homogène, dans la mesure où la distance entre l'anode et la cathode est faible.

L'anode plate selon l'invention est obtenue par revêtement sur l'une des faces de la feuille de matériau chimiquement inerte à l'aide d'une couche métallique par des moyens appropriés, par exemple par le dépôt d'une suspension colloïdale d'or ou de platine (métaux résistant à l'oxydation anodique et aux pH extrêmes), qui peut être effectué:

1) par application suivie d'une cuisson à quelques centaines de degrés, le support devant supporter cette température.

2) par dépôt d'un miroir sous vide extrême ce qui est moins coûteux sur le plan de la quantité de métal nécessaire et du choix du support mais onéreux par la technologie.

L'anode plate selon l'invention convient pour créer, en association avec une cathode plate métallique, un champ homogène sur une grande surface. La cathode peut être par exemple en acier inoxydable, en graphite ou en cuivre.

Selon un mode de réalisation préféré de l'invention, l'anode plate est essentiellement constituée d'une feuille de verre, d'épaisseur quelconque, revêtue sur l'une de ses faces avec une couche mince d'oxyde métallique semi-conducteur par fusion selon des procédés classiques connus.

Le revêtement conducteur du verre doit être suffisant pour que cet ensemble joue le rôle d'une anode. En général, il suffit que la couche conductrice ait une épaisseur de quelques $\mu$m.

Le verre ainsi revêtu conduit uniformément l'électricité à sa surface, la couche conductrice n'étant pas sujette à oxydation anodique. De plus, la couche conductrice résiste à l'abrasion et n'est pas dissoute dans les tampons aux pH utilisés pour ce type d'application (pH 3 à 9). Toutefois, la couche conductrice est sensible à la réduction cathodique ; pour cette raison, il convient de protéger le circuit des inversions de polarité par une diode.

L'invention a également pour objet un dispositif pour électrophorèse transversale qui contient l'anode plate selon l'invention. Ce dispositif , qui est constitué d'un récipient, tel qu'une cuve, comprend essentiellement l'anode selon l'invention, une cathode, des moyens d'espacement appropriés et des moyens de contrôle électrique. Ce dispositif va être maintenant décrit plus en détail en référence aux dessins annexés sur lesquels:

-Figure 1 est une vue en perspective des éléments du dispositif selon l'invention ;

- Figure 2 est une représentation schématique des moyens électriques pour le fonctionnement du dispositif.

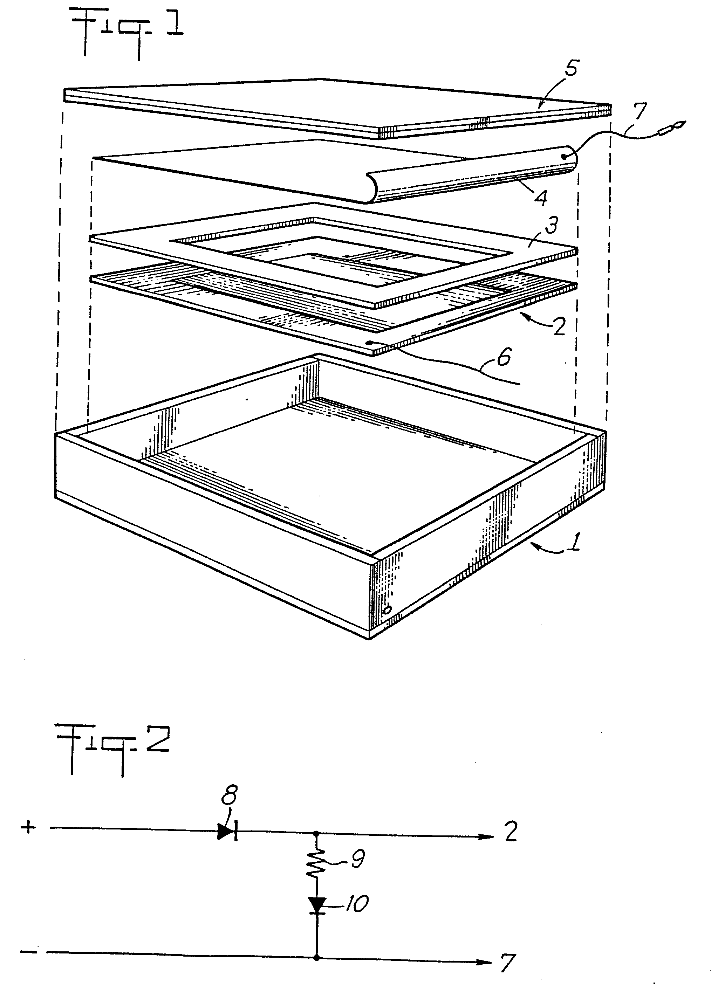

Le dispositif selon l'invention est donc constitué d'un récipient (1) qui a avantageusement la forme d'une cuve parallélépipédique. Ce récipient contient l'anode plate (2) selon l'invention des moyens d'espacement (3), une cathode (4) et éventuellement un couvercle (5), l'anode (2) ayant sensiblement les mêmes dimensions que celles de la cuve.

Selon un mode de réalisation préféré de l'invention, les deux électrodes sont disposées horizontalement en un assemblage ayant avantageusement 5 à 10 mm d'épaisseur, formé de 6 couches suces-sives :

- anode ;
- papier -filtre imbibé de tampon de transfert ;
- support d'immobilisation des substances (par exemple papier en nitrocellulose) ;
- gel de séparation ;
- papier filtre imbibé de tampon transfert ;
- cathode plate.

L'acier inoxydable convient parfaitement bien pour fabriquer la cathode plate. On peut également utiliser du cuivre ou du graphite.

Il importe en fait d'utiliser un matériau qui résiste aux pH normalement utilisés pour le transfert de substances à analyser ; ces pH sont en général compris entre 3 et 9.

La cathode (4), en acier inoxydable constitue donc la surface supérieure de l'assemblage. L'anode (2) en verre, recouverte de sa couche conductrice, est au-dessous. Dans un tel assemblage, le champ électrique est homogène sur toute la surface du gel et permet le passage d'un courant homogène par unité de surface. De plus, comme ce courant ne peut passer qu'à travers le gel, un courant de faible intensité suffit, ce qui permet d'appliquer des gradients de tension élevés (20-40 V/cm). Le peu de chaleur produit pendant l'électrophorèse transversale est dissipé par la cathode en acier inoxydable.

Dans de telles conditions, le transfert est rapide ; plus de 80 % de protéines migrant en gel de polyacrylamide à l'aide du dodécylsulfate de sodium (SDS) avec un $R_f$ de 0,2 ou plus sont transférés en 60 minutes.

D'autres avantages de ce dispositif sont la facilité de manipulation et la faible consommation de tampon de transfert (20 fois plus faible que dans les cuves classiques).

Un mode de réalisation du dispositif selon l'invention est décrit ci-après à titre d'exemple non limitatif.

La cuve (1) et son couvercle (5) sont fabriqués avec du Plexiglas de 6 mm collé par un mélange de Plexiglas dilué dans du chloroforme. Les dimensions du fond de la cuve sont de 15,5 x 10,5 cm, la profondeur est de 3,5 cm.

L'anode (2) est une plaque de verre "Hortiplus" de la Société Glaverbel (4 mm d'épaisseur, 10 x 15 cm), le côté recouvert d'oxydes métalliques (côté conducteur) étant orienté vers le haut. Les bords de la plaque sur le côté conducteur sont recouverts d'une peinture conductrice (par exemple à l'or, à l'argent ou au cuivre colloïdal), sur une largeur de 0,5 cm. Sur un des côtés, un fil électrique (6) est collé à l'aide d'une colle à l'argent.

Le cadre espaceur (3) est fabriqué en PVC de 3 mm. Il s'agit d'un cadre de 1 cm de large, dimensions extérieures 10 x 15 cm.

La cathode (4) est fabriquée en tôle d'acier inoxydable (1 mm d'épaisseur, 10 x 17 cm) recourbée à 90° sur 2 x 10 cm. La partie recourbée sert de poignée de manipulation. Dans la partie recourbée, une vis fixe un fil électrique (7) terminé par une fiche banane mâle.

L'alimentation de l'anode se fait avantageusement au travers d'une diode (8) BY 127 placée en série avec le fil d'alimentation (cathode de la diode du côté de l'anode de la cuve). Cette diode sert de protection en cas d'inversion de polarité. L'alimentation de la cathode est réalisée au moyen de fiches bananes mâle et femelle. Une résistance (9) de 5,6 k$\Omega$2W en série avec une diode (10) émettrice de lumière (LED) sont connectées en parallèle sur les fils d'alimentation après la diode BY 127. La diode LED permet de contrôler la bonne connexion.

Lors de l'assemblage du dispositif selon l'invention, l'anode est placée au fond de la cuve avec sa face conductrice vers le haut. Le fil électrique fixé à l'anode est passé à l'extérieur par un trou dans la paroi de la cuve. Les bords de verre sont recouverts d'un enduit de fluorosilicone sur une largeur de 1 cm. On couvre de cet enduit tout l'espace entre les côtés latéraux du verre et de la cuve. Ensuite, on dépose le cadre espaceur en prenant soin que la hauteur de l'ensemble de l'enduit plus cadre espaceur soit la même partout (l'excès d'enduit peut être facilement enlevé tant que celui-ci n'a pas durci). On connecte le fil électrique de l'anode à l'ensemble électrique qui est collé sur le côté de la cuve.

Les dimensions de ce dispositif conviennent pour l'électrophorèse transversale de gels de 7,5 x 6 cm : les protéines dans un ou deux gels démontés peuvent être transférées en même temps. Sept papiers "Whatman 3MM" 7,5 x 6 cm (7,5 x 12,5 cm) imbibés de tampon de transfert (25 mM Tris, 192 mM glycine (pH 8,3) méthanol 20 %) sont placés au fond de la cuve. Par ailleurs, après le démontage du (ou des) gel(s), on place, à la surface, un papier de nitrocellulose 7,5 x 6 cm imbibé de tampon de transfert. L'ensemble (ou les deux ensembles) gel-nitrocellulose sont posés sur le papier-filtre au fond de la cuve. A la surface du (des) gel(s) on pose ensuite sept papiers-filtre 7,5 x 6 cm imbibés de tampon de transfert. Enfin, on dépose la cathode sur ces papiers-filtre .

On connecte les fiches de la cathode. On connecte les fils électriques sur des bornes de la source de tension et on applique une tension de 20 à 30V. Le courant initial est de 300-400 mA pour deux gels à 30 V. Il diminue au cours de l'électrophorèse.

Après 60 minutes, on débranche le dispositif, on enlève la cathode. On sort sans difficulté le papier nitrocellulose qui contient les substances transférées depuis le gel.

Le dispositif selon l'invention convient bien pour un transfert rapide de protéines séparées par électrophorèse en gel de polyacrylamide. Il est particulièrement approprié pour la caractérisation de protéines antigéniquement apparentées et l'étude de la spécificité d'anticorps mono- et polyclonaux.

Il convient notamment pour détecter les variants des hormones adénohypophysaires et tester la spécificité des antisera dirigés contre eux.

R E V E N D I C A T I O N S

1.          Dispositif pour l'électrophorèse transversale, caractérisé en ce qu'il comporte une cuve (1) munie de: un couvercle (5),
une anode (2), une cathode plate (4) et des moyens électriques de connexion (6), ladite anode (2) étant une anode plate présentant une surface
conductrice continue ayant sensiblement les mêmes dimensions que celles
de la cuve et comprenant un support constitué d'un matériau chimiquement
inerte éventuellement revêtu d'au moins une couche conductrice constituée d'une couche mince d'un métal et/ou d'oxydes métalliques conducteurs
ou semi-conducteurs résistant à l'oxydation anodique.

2.          Dispositif selon la revendication 1, caractérisé en
ce que le support chimiquement inerte de l'anode (2) est non conducteur et en ce qu'il est revêtu d'une couche de platine, d'or, d'argent,
de graphite ou d'oxydes d'étain, de chrome ou de cobalt.

3.          Dispositif selon l'une des revendications 1 ou 2, caractérisé en ce que le support chimiquement inerte de l'anode (2) est une
feuille de verre et en ce que la couche conductrice est une couche
d'oxyde d'étain.

4.          Dispositif selon la revendication 1, caractérisé en ce
que le support chimiquement inerte de l'anode (2) est conducteur.

5.          Dispositif selon la revendication 4, caractérisé en
ce que le support chimiquement inerte et conducteur est choisi parmi
le graphite, l'or, le titane, le molybdène et le chrome.

6.          Dispositif selon l'une quelconque des revendications
1 à 5, caractérisé en ce que la cathode (4) est en acier inoxydable, en
cuivre ou en graphite.

7.          Application du dispositif selon l'une quelconque des
revendications 1 à 6, au transfert par électrophorèse transversale de
macromolécules électriquement chargées sur une membrane immobilisatrice,
préalablement séparées par électrophorèse en gel.

8.          Application selon la revendication 7, caractérisée en
ce que le champ électrique entre l'anode et la cathode est un champ
homogène permettant le passage d'un courant homogène par unité de surface.

Fig. 1

Fig. 2